# FASCICULE DE BREVET EUROPEEN

(11) **EP 1 529 163 B1**
(45) Date de publication et mention de la délivrance du brevet: **16.02.2011**
(21) Numéro de dépôt: 03762731.2
(22) Date de dépôt: 03.07.2003
(51) Int. Cl.: F02K 9/84

(54) **Moteur fusée à tuyère orientable**
Raketentriebwerk mit schwenkdüse
Rocket engine with swivelling nozzle

(30) Priorité: 04.07.2002 FR 0208370
(43) Date de publication de la demande: 11.05.2005
(73) Titulaire: Snecma Propulsion Solide, 33187 Le Haillan Cedex (FR)
(72) Inventeur: HERVIO, Antoine, F-33160 Saint Aubin de Medoc (FR); BERDOYES, Michel, F-33610 CESTAS (FR); DUMORTIR, André, F-33700 MERIGNAC (FR); BIZ, Philippe, 33160 ST MEDARD EN JALLES (FR)
(74) Mandataire: Joly, Jean-Jacques
(86) Numéro de dépôt international: PCT/FR2003/002067
(87) Numéro de publication internationale: WO 2004/005690

(56) Documents cités:
- DE-A- 3 119 183
- FR-A- 1 237 219
- FR-A- 1 277 138
- FR-A- 2 068 765
- FR-A- 2 349 739
- FR-A- 2 370 864
- GB-A- 827 299
- US-A- 3 142 153
- US-A- 3 237 890
- US-A- 4 350 297

## Description

### Arrière-plan de l'invention

L'invention concerne les moteurs fusées à tuyère orientable.

Le domaine d'application de l'invention est plus particulièrement, mais non exclusivement celui de missiles, notamment de missiles tactiques dont le diamètre est inférieur à environ 500 mm.

Un moteur fusée à tuyère orientable comprend une enveloppe délimitant une chambre de combustion s'ouvrant à travers un fond arrière, au moins une tuyère comprenant un divergent mobile et une partie fixe, un dispositif de liaison articulée reliant le divergent mobile à la partie fixe, et un dispositif d'actionnement agissant sur la tuyère pour pouvoir modifier son orientation et, par là-même, la direction du vecteur de poussée produit par l'éjection de gaz de combustion hors de la chambre.

Un dispositif de liaison articulée connu utilise une butée sphérique lamifiée formée d'un empilement de couches métalliques ou en matériau composite alternant avec des couches en matériau élastique adhérisées les unes aux autres. Un tel dispositif permet un débattement limité de la tuyère par rapport à l'enveloppe par déformation en cisaillement des couches élastiques. La butée lamifiée est montée de manière à être sollicitée normalement en compression sous l'effet de l'effort exercé par les gaz de combustion sur la tuyère, du fait de sa résistante limitée aux efforts d'extension. Or, dans certaines configurations, la butée lamifiée peut être soumise à des efforts d'extension. En outre, les butées lamifiées sont sensibles au vieillissement et la réalisation de butées lamifiées capables de tenir dans une plage de températures très étendue est délicate.

Il a été proposé, pour s'affranchir des inconvénients ci-dessus, de réaliser une tuyère à divergent orientable présentant une surface sphérique directement en contact avec une surface sphérique complémentaire formée sur la partie fixe de la tuyère (système rotule/contre-rotule), la modification de l'orientation du divergent de la tuyère s'accompagnant du glissement des surfaces sphériques l'une sur l'autre. Ceci est décrit dans les documents US 3142153 et GB 827299. Les parties en contact mutuel du divergent mobile et de la partie fixe de la tuyère sont typiquement réalisées en un matériau composite carbone/carbone (C/C) qui présente une bonne tenue thermomécanique, en particulier à haute température, et une résistance élevée à l'ablation. Un tel montage évite les inconvénients des montages avec butées sphériques lamifiées, mais le problème à résoudre est d'assurer une étanchéité aux gaz au niveau des surfaces sphériques en contact pour toute orientation du divergent de la tuyère. Pour ce faire, il faut assurer un contact permanent entre la rotule et la contre-rotule quel que soit l'angle d'activation. Des essais préliminaires ont été effectués avec une telle tuyère orientable. Ces essais ont montré la viabilité du concept mais avec des limitations au pilotage dans les plans tangage et lacet, le placage rotule/contre-rotule étant assuré par des vérins d'activation précontraints.

### Objet et résumé de l'invention

L'invention a pour but de proposer un moteur fusée à tuyère orientable ne présentant pas les inconvénients de l'état de la technique à liaison par butée sphérique lamifiée évoqué plus haut, notamment de proposer un montage avec articulation qui soit robuste et fiable tout en assurant une étanchéité aux gaz au niveau des surfaces de contact pour toute orientation désirée de la tuyère.

Ce but est atteint grâce à un moteur fusée à tuyère orientable comprenant : une enveloppe entourant une chambre de combustion et ayant un fond arrière ; une tuyère comprenant un divergent mobile et une partie fixe solidaire du fond arrière ; un dispositif de liaison articulée raccordant le divergent mobile de la tuyère à la partie fixe, le divergent mobile et la partie fixe étant en contact mutuel par des surfaces sphériques respectives ; et un dispositif d'actionnement agissant sur le divergent mobile de la tuyère pour pouvoir faire varier la direction du vecteur de poussée du moteur par modification de l'orientation du divergent de la tuyère avec glissement des surfaces sphériques l'une sur l'autre,
laquelle tuyère orientable comprend en outre, conformément à l'invention, des moyens de rappel élastique interposés entre le divergent mobile de la tuyère et la partie fixe et agissant sur le divergent mobile en direction opposée à celle d'écoulement des gaz dans la tuyère pour le rappeler vers la partie fixe afin de maintenir les surfaces sphériques en contact mutuel pour toute orientation désirée de la tuyère.

Grâce à l'effort de rappel élastique exercé, un effort de placage relativement stable des surfaces sphériques l'une sur l'autre peut être assuré vis-à-vis des déplacements réalisés en cours de fonctionnement, ce qui permet une activation tous azimuts sans affecter l'étanchéité aux gaz au niveau des surfaces sphériques.

Le dispositif de liaison peut être du type à cardan comprenant une couronne, deux premiers bras de liaison reliant le divergent mobile de tuyère à la couronne par l'intermédiaire de deux premières articulations, et deux seconds bras de liaison reliant la partie fixe de tuyère à la couronne par l'intermédiaire de deux secondes articulations.

Les moyens de rappel élastique peuvent être intégrés aux premiers bras de liaison. Ils peuvent consister dans des ressorts précontraints.

Selon un autre mode de réalisation, les moyens de rappel élastiques sont constitués au moins en partie par une pièce élastiquement déformable du dispositif de liaison, par exemple la couronne de cardan, qui est déformée élastiquement au montage.

Un moyen antifriction peut être présent entre les surfaces sphériques en contact mutuel. Le moyen antifriction peut être constitué par un lubrifiant, par exemple une graisse graphitée. En variante, le moyen antifriction peut être constitué par un revêtement ou une pièce d'interface qui est disposé dans la zone de contact entre les surfaces sphériques, par exemple un revêtement en un matériau à faible coefficient de frottement formé sur l'une des surfaces ou sur les deux.

Le dispositif d'actionnement peut être formé de façon classique par des vérins ou activateurs linéaires. En variante, lorsque le dispositif de liaison est un dispositif à cardan à deux axes de rotation, le dispositif d'actionnement comprend des activateurs rotatifs positionnés sur les axes du cardan afin de piloter directement ces derniers.

Par rapport aux dispositifs connus utilisant une butée sphérique lamifiée, le montage de tuyère orientable conforme à l'invention présente des avantages significatifs :
- il a une meilleure robustesse vis-à-vis des conditions d'environnement et de vieillissement,
- il permet d'obtenir des angles importants de déviation de poussée par de plus grandes surfaces de contact sphériques, ce qui s'ajoute au phénomène d'amplification de déviation de poussée inhérent aux dispositifs à divergent mobile et dû à des effets aérodynamiques internes à la tuyère,

- il est moins sensible à des phénomènes d'efforts rentrants, c'est-à-dire agissant sur le divergent mobile vers l'amont de celui-ci, de tels efforts pouvant endommager les butées lamifiées et étant repris par les surfaces sphériques en contact dans la tuyère selon l'invention, et
- il permet de s'affranchir non seulement d'une butée sphérique lamifiée, qui est un composant relativement coûteux, mais aussi de la protection thermique qui doit être associée à celle-ci.

### Brève description des dessins

L'invention sera mieux comprise à la lecture de la description faite ci-après en référence aux dessins annexés sur lesquels :
- la figure 1 est une vue schématique partielle en perspective d'un moteur fusée conforme à l'invention ;
- la figure 2 est une vue partielle en coupe longitudinale du moteur fusée de la figure 1 ; et
- la figure 3 est une vue en coupe transversale selon le plan III-III de la figure 2.

### Description détaillée d'un mode de réalisation

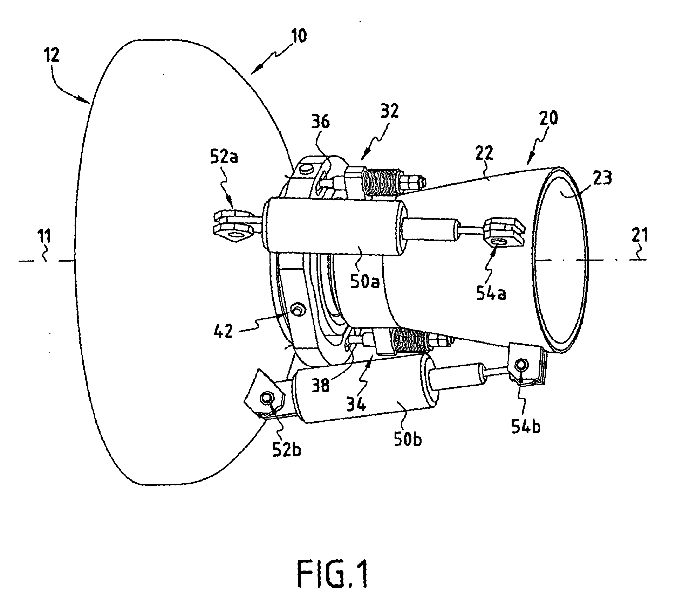

Les figures 1 à 3 illustrent schématiquement un moteur fusée ayant une enveloppe 10 entourant une chambre de combustion 12 dans laquelle est logé un bloc de propergol solide (non représenté). La chambre 12 s'ouvre à travers son fond arrière 14 à l'avant d'une tuyère comprenant une pièce de col 16 et un divergent 20.

La pièce de col 16, qui définit non seulement le col de tuyère proprement dit mais aussi le convergent et une amorce de divergent, est fixée par exemple par vissage dans une bague 18 fixée au fond 14 de l'enveloppe, de manière à être solidaire du fond 14.

La pièce de col 16 est typiquement en matériau composite C/C et la bague 18 est typiquement en matériau composite isolant. Des couches de protection thermique sont prévues sur la face intérieure de l'enveloppe. Une telle structure de chambre de combustion est bien connue en soi.

Le divergent 20 de tuyère (ou au moins une partie de celui-ci) est mobile en étant monté sur une partie fixe de tuyère, en l'espèce la pièce 16. Comme également connu en soi, la réalisation d'une tuyère orientable par divergent mobile est avantageuse en ce qu'elle permet d'amplifier la déviation de poussée par rapport à l'angle effectif de pivotement de l'axe principal du divergent.

Le divergent mobile 20 comprend typiquement une enveloppe 22 par exemple métallique munie d'une couche interne 23 en matériau isolant ablatif par exemple en composite à fibres de renfort en carbone ou en silice et matrice en résine phénolique. A son extrémité amont, le divergent mobile 20 comprend une pièce 24 en forme de bague interne réalisée typiquement en matériau composite C/C.

La pièce de col 16 et la pièce de divergent mobile 24 sont en contact mutuel par des surfaces sphériques respectives 16a, 24a centrées sur l'axe 11 de la tuyère.

On notera que les pièces de divergent mobile 22, 24 et 23 peuvent être réunies pour former une seule pièce en matériau composite.

Le divergent mobile de tuyère est relié à la partie fixe de celle-ci par l'intermédiaire d'une liaison mécanique de type cardan comprenant une couronne 30, par exemple métallique, disposée autour du fond de l'enveloppe, deux bras de liaison 32, 34 solidaires de l'enveloppe 22 du divergent mobile de tuyère et reliés à leurs extrémités à la couronne par l'intermédiaire de deux articulations respectives 36, 38 et deux autres bras de liaison 42, 44 solidaires de la couronne 30 et reliés à leurs extrémités au fond 14 de l'enveloppe 10 de la chambre de combustion, et par là-même à la partie fixe de tuyère, par l'intermédiaire de deux autres articulations respectives 46, 48.

Les bras 32, 34 et articulations 36, 38 sont disposés en des emplacements opposés par rapport à l'axe 11, les axes des articulations 36, 38 définissant un axe de pivotement 39 situé dans un plan perpendiculaire à l'axe 11.

De même, les bras 42, 44 et articulations 46, 48 sont disposés en des emplacements opposés par rapport à l'axe 21 de la chambre de combustion, les axes des articulations 46, 48 définissant un axe de pivotement 49 situé dans un plan perpendiculaire à l'axe 21. Les articulations 36, 38, 46, 48 sont espacées angulairement de façon régulière autour de la couronne 30, de sorte que les axes de pivotement 39 et 49 sont orthogonaux.

Des surfaces de butée 16b, 24b des pièces 16 et 24 limitent le débattement angulaire possible entre l'axe 11 et l'axe 21.

L'actionnement (activation) de la tuyère peut être assuré soit par une pluralité de vérins ou activateurs linéaires qui prennent appui, à une extrémité, sur l'enveloppe 22 du divergent de tuyère 20 et, à l'autre extrémité, sur l'enveloppe 10 de la chambre de combustion, soit par une pluralité d'activateurs rotatifs positionnés au droit du cardan sur les axes 39 et 49 afin de piloter directement les deux axes de rotation du cardan.

Dans l'exemple illustré, deux activateurs linéaires 50a, 50b seulement sont prévus, qui sont reliés aux enveloppes 10 et 22 par des articulations 52a, 52b et 54a 54b et les plans méridiens comprenant les axes 51a et 51b des activateurs 50a et 50b forment entre eux un angle égal à 90° environ.

En variante, on notera que les activateurs pourront être montés entre la couronne 30 et le divergent mobile de tuyère 20. On notera aussi que le nombre d'activateurs pourra être supérieur à deux.

Conformément à l'invention, des moyens de rappel élastique sont prévus qui agissent sur le divergent mobile de tuyère 20 en direction opposée à celle de l'écoulement des gaz dans la tuyère afin de maintenir en permanence les surfaces 16a et 24a en contact mutuel quelle que soit l'orientation désirée du divergent de tuyère. De la sorte, l'étanchéité aux gaz entre les surfaces 16a et 24a est conservée pour toute orientation possible de l'axe 21 par rapport à l'axe 11.

Dans l'exemple illustré, les moyens de rappel élastique sont constitués par des ressorts 62, 64, par exemple de type rondelles Belleville, précontraints en compression et logés dans les bras 32, 34.

Plus précisément, chaque bras 32, 34 comporte une tige 31, 33 dont une extrémité est reliée à l'articulation 36, 38 et dont l'autre extrémité traverse un perçage 26a 28a d'une oreille 26, 28 solidaire de l'enveloppe 22 du divergent de tuyère.

Cette autre extrémité est maintenue au moyen d'un écrou 45, 47 vissé sur l'extrémité de la tige avec le ressort 62, 64 interposé entre l'écrou 45, 47 et l'oreille 26, 28. Le ressort 62, 64 est par exemple logé dans l'extrémité élargie d'une bague 66, 68 engagée dans le perçage 26a, 28a.

Les bagues 66, 68 sont introduites dans les perçages 26a, 28a et sont traversées sans jeu par les tiges 31, 33, afin d'éliminer ou au moins de limiter les jeux entre les tiges 31, 33 et les perçages 26a, 28a et d'éviter ainsi une possible rotation du divergent mobile autour de son axe 21.

La précontrainte en compression des ressorts 62, 64 est déterminée de manière à assurer un rappel efficace des surfaces 16a, 24a l'une sur l'autre pour toute orientation possible du divergent de tuyère 20.

Lors de l'activation de la tuyère orientable par action sur les activateurs 50a, 50b, les surfaces sphériques en contact 16a, 24a frottent l'une sur l'autre. Le frottement entre les pièces 16, 24 peut être réalisé à sec. On peut aussi utiliser un moyen antifriction tel qu'un revêtement ou une pièce d'interface présent dans la zone de contact rotule/contre-rotule, sur l'une ou sur les deux surfaces sphériques formant rotule et contre-rotule, par exemple en un matériau à base de Téflon^{®}, ou tel qu'un lubrifiant, par exemple une graisse graphitée pénétrant au moins partiellement dans la porosité résiduelle de la pièce 16.

D'autres moyens que des ressorts peuvent être utilisés pour assurer le rappel élastique nécessaire au bon fonctionnement du moteur pour toute orientation possible de la tuyère. Le rappel pourra par exemple être assuré par une pièce élastiquement déformable du dispositif de liaison reliant le divergent mobile à la partie fixe de tuyère, cette pièce étant déformée élastiquement au montage.

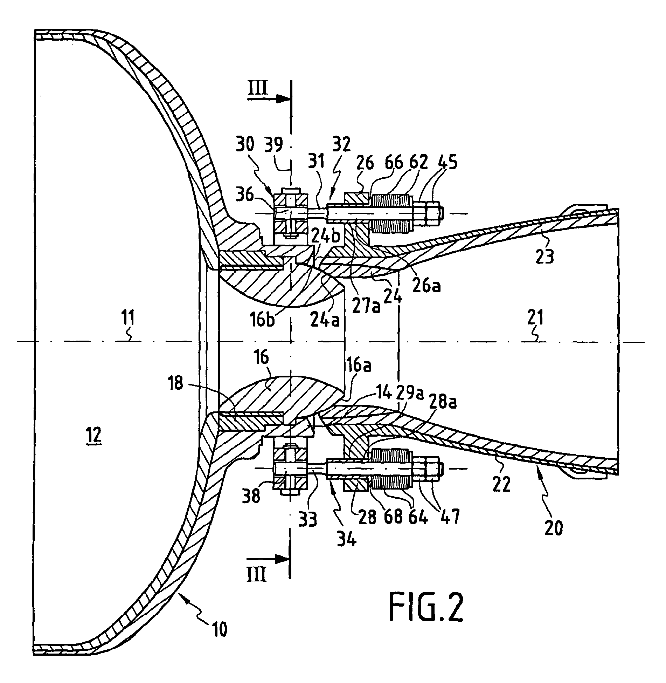

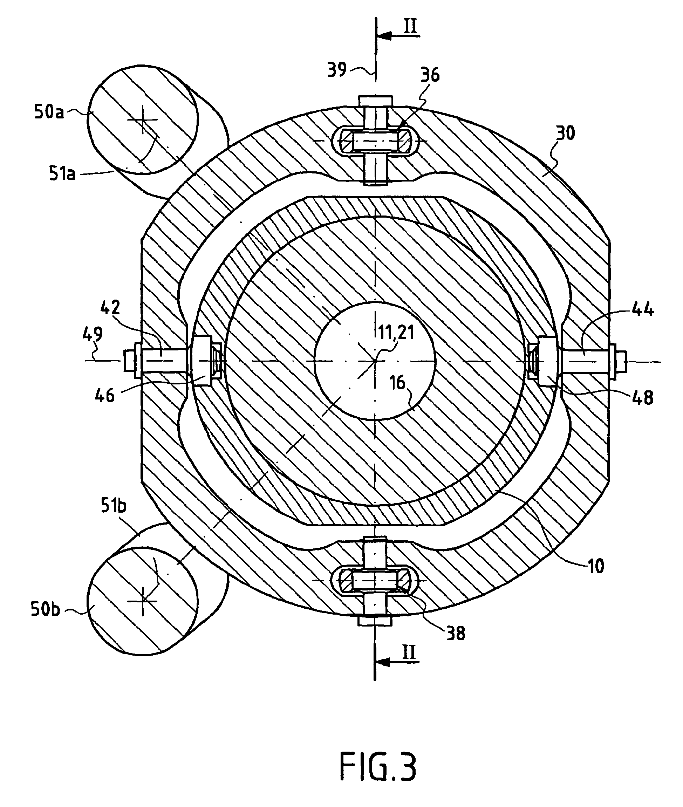

Ainsi, selon une variante du mode de réalisation des figures 2 et 3, le rappel est assuré par déformation élastique de la couronne 30, sans faire appel aux ressorts 62, 64. A cet effet, la couronne 30, par exemple en acier, a une épaisseur ou présente des parties amincies qui sont déterminées pour permettre une déformation élastique sous l'effet du serrage des écrous 45, 47.

## Revendications

1. Moteur fusée à tuyère orientable comprenant : une enveloppe (10) entourant une chambre de combustion (12) et ayant un fond arrière (14) ; une tuyère comprenant un divergent mobile (20) et une partie fixe (16) solidaire du fond arrière ; un dispositif de liaison articulée raccordant le divergent mobile de tuyère à la partie fixe, le divergent mobile et la partie fixe étant en contact mutuel par des surfaces sphériques respectives (24a, 16a); et un dispositif d'actionnement (50a, 50b) agissant sur le divergent mobile de tuyère pour pouvoir faire varier la direction du vecteur de poussée du moteur par modification de l'orientation de la tuyère avec glissement des surfaces sphériques l'une sur l'autre,
**caractérisé en ce que** des moyens (62, 64) de rappel élastique sont interposés entre le divergent mobile de tuyère (20) et la partie fixe (16) et agissent sur le divergent mobile en direction opposée à celle de l'écoulement des gaz dans la tuyère pour le rappeler vers la partie fixe afin de maintenir les surfaces sphériques (24a, 16a) en contact mutuel pour toute orientation désirée de la tuyère.

2. Moteur fusée selon la revendication 1, dans lequel le dispositif de liaison est un dispositif à cardan qui comprend une couronne (30), deux premiers bras de liaison (32, 34) reliant le divergent mobile de tuyère (20) à la couronne par l'intermédiaire de deux premières articulations (36, 38), et deux seconds bras de liaison (42, 44) reliant la couronne (30) au fond arrière (14) de l'enveloppe par l'intermédiaire de deux secondes articulations (46, 48), **caractérisé en ce que** les moyens de rappel élastique (62,64) sont intégrés dans des bras de liaison.

3. Moteur fusée selon la revendication 2, **caractérisé en ce que** les moyens de rappel élastique (62, 64) sont intégrés dans les premiers bras de liaison (32, 34).

4. Moteur fusée selon l'une quelconque des revendications de 1 à 3, **caractérisé en ce que** les moyens de rappel élastique consistent dans des ressorts précontraints (62, 64).

5. Moteur fusée selon l'une quelconque des revendications 1 et 2, **caractérisé en ce que** les moyens de rappel élastique sont constitués au moins en partie par une pièce élastiquement déformable du dispositif de liaison qui est déformée élastiquement au montage.

6. Moteur fusée selon les revendications 2 et 5, **caractérisé en ce que** la pièce élastiquement déformable est la couronne de cardan.

7. Moteur fusée selon l'une quelconque des revendications 1 à 6, **caractérisé en ce qu'**un moyen antifriction est présent entre les surfaces sphériques en contact mutuel.

8. Moteur fusée selon la revendication 7, **caractérisé en ce que** le moyen antifriction est un lubrifiant.

9. Moteur fusée selon la revendication 8, **caractérisé en ce que** le lubrifiant est une graisse graphitée.

10. Moteur fusée selon la revendication 7, **caractérisé en ce que** le moyen antifriction est constitué d'un revêtement ou d'une pièce d'interface dans la zone de contact entre les surfaces sphériques.

11. Moteur fusée selon l'une quelconque des revendications 1 à 10, dans lequel le dispositif de liaison est un dispositif à cardan à deux axes de rotation, **caractérisé en ce que** le dispositif d'actionnement comprend des activateurs rotatifs positionnés sur les axes du cardan afin de piloter directement ces derniers.

## Claims

1. A rocket engine with steerable nozzle, comprising: a casing (10) surrounding a combustion chamber (12) and having a rear end wall (14) ; a nozzle comprising a moving diverging portion (20) and a static portion (16) secured to the rear end wall; a jointed link device connecting the moving diverging portion of the nozzle to the static portion, the moving diverging portion and the static portion being in mutual contact via respective spherical surfaces (24a, 16a); and an actuator device (50a, 50b) acting on the moving diverging portion of the nozzle to enable the direction of the thrust vector of the engine to be varied by modifying the orientation of the nozzle with the spherical surfaces sliding one on the other,
the rocket engine being **characterized in that** resilient return means (62, 64) are interposed between the moving diverging portion (20) of the nozzle and the static portion (16), said means acting on the moving diverging portion in a direction opposed to the gas flow direction in the nozzle to urge the moving diverging portion towards the static portion so as to keep the spherical surfaces (24a, 16a) in mutual contact for any desired orientation of the nozzle.

2. A rocket engine according to claim 1, in which the link device is a cardan mount comprising a ring (30), two first link arms (32, 34) connecting the moving diverging portion (20) of the nozzle to the ring via two first hinges (36, 38), and two second link arms (42, 44) connecting the ring (30) to the rear end wall (14) of the casing via two second hinges (46, 48), the nozzle being **characterized in that** the resilient return means (62, 64) are integrated in link arms.

3. A rocket engine according to claim 2, **characterized in that** the resilient return means (62, 64) are integrated in the first link arms (32, 34).

4. A rocket engine according to any one of claims 1 to 3, **characterized in that** the resilient return means are constituted by prestressed springs (62, 64).

5. A rocket engine according to claim 1 or claim 2, **characterized in that** the resilient return means are constituted at least in part by an elastically deformable part of the link device which is elastically deformed on assembly.

6. A rocket engine according to claims 2 and 5, **characterized in that** the elastically deformable part is the ring of the cardan mount.

7. A rocket engine according to any one of claims 1 to 6, **characterized in that** anti-friction means are present between the spherical surfaces in mutual contact.

8. A rocket engine according to claim 7, **characterized in that** the anti-friction means are constituted by a lubricant.

9. A rocket engine according to claim 8, **characterized in that** the lubricant is a graphite grease.

10. A rocket engine according to claim 7, **characterized in that** the anti-friction means are constituted by a coating or by an interface part in the zone of contact between the spherical surfaces.

11. A rocket engine according to any one of claims 1 to 10, in which the link device is a cardan mount having two pivot axes, the nozzle being **characterized in that** the actuator device comprises rotary actuators positioned on the cardan axes in order to steer said axes directly.

## Patentansprüche

1. Raketentriebwerk mit einstellbarer Düse, umfassend einen Mantel (10), der eine Brennkammer (12) umschließt und einen hinteren Boden (14) aufweist, eine Düse mit einem beweglichen divergenten Düsenteil (20) und einem festen Teil (16), der mit dem hinteren Boden fest verbunden ist, eine Gelenkverbindungsvorrichtung, die das bewegliche divergente Düsenteil mit dem festen Teil verbindet, wobei das bewegliche divergente Düsenteil und der feste Teil durch jeweilige Kugelflächen (24a, 16a) in gegenseitigem Kontakt sind, sowie eine Betätigungsvorrichtung (50a, 50b), die auf das bewegliche divergente Düsenteil wirkt, um die Richtung des Schubvektors des Triebwerks durch Änderung der Ausrichtung der Düse unter Aufeinandergleiten der Kugelflächen ändern zu können,
**dadurch gekennzeichnet, daß** Mittel (62, 64) zum elastischen Rückstellen zwischen dem beweglichen divergenten Düsenteil (20) und dem festen Teil (16) angeordnet sind und auf das bewegliche divergente Düsenteil in zur Strömungsrichtung der Gase in der Düse entgegengesetzter Richtung wirken, um es in Richtung des festen Teils rückzustellen, damit die Kugelflächen (24a, 16a) bei jeder gewünschten Ausrichtung der Düse in gegenseitigem Kontakt gehalten werden.

2. Raketentriebwerk nach Anspruch 1, wobei die Verbindungsvorrichtung eine Kardanvorrichtung ist, die einen Kranz (30), zwei erste Verbindungsarme (32, 34), welche das bewegliche divergente Düsenteil (20) über zwei erste Gelenke (36, 38) mit dem Kranz verbinden, sowie zwei zweite Verbindungsarme (42, 44), welche den Kranz (30) über zwei zweite Gelenke (46, 48) mit dem hinteren Boden (14) des Mantels verbinden, umfaßt, **dadurch gekennzeichnet, daß** die Mittel zum elastischen Rückstellen (62, 64) in Verbindungsarme integriert sind.

3. Raketentriebwerk nach Anspruch 2, **dadurch gekennzeichnet, daß** die Mittel zum elastischen Rückstellen (62, 64) in die ersten Verbindungsarme (32, 34) integriert sind.

4. Raketentriebwerk nach einem der Ansprüche 1 bis 3, **dadurch gekennzeichnet, daß** die Mittel zum elastischen Rückstellen aus vorgespannten Federn (62, 64) bestehen.

5. Raketentriebwerk nach einem der Ansprüche 1 und 2, **dadurch gekennzeichnet, daß** die Mittel zum elastischen Rückstellen wenigstens teilweise von einem elastisch verformbaren Teil der Verbindungsvorrichtung gebildet sind, das bei der Montage elastisch verformt wird.

6. Raketentriebwerk nach den Ansprüchen 2 und 5, **dadurch gekennzeichnet, daß** das elastisch verformbare Teil der Kardankranz ist.

7. Raketentriebwerk nach einem der Ansprüche 1 bis 6, **dadurch gekennzeichnet, daß** zwischen den in gegenseitigem Kontakt befindlichen Kugelflächen ein Gleitmittel vorhanden ist.

8. Raketentriebwerk nach Anspruch 7, **dadurch gekennzeichnet, daß** das Gleitmittel ein Schmiermittel ist.

9. Raketentriebwerk nach Anspruch 8, **dadurch gekennzeichnet, daß** das Schmiermittel ein Graphitschmiermittel ist.

10. Raketentriebwerk nach Anspruch 7, **dadurch gekennzeichnet, daß** das Gleitmittel von einer Beschichtung oder von einem Grenzflächenteil im Kontaktbereich zwischen den Kugelflächen gebildet ist.

11. Raketentriebwerk nach einem der Ansprüche 1 bis 10, wobei die Verbindungsvorrichtung eine Kardanvorrichtung mit zwei Rotationsachsen ist, **dadurch gekennzeichnet, daß** die Betätigungsvorrichtung Drehaktuatoren umfaßt, die an den Achsen des Kardangelenks positioniert sind, um letztere direkt zu steuern.
